# EUROPEAN PATENT SPECIFICATION

(11) **EP 1 833 498 B1**
(45) Date of publication and mention of the grant of the patent: **27.01.2010**
(21) Application number: 05800022.5
(22) Date of filing: 28.10.2005
(51) Int. Cl.: A61K 36/00

(54) **ORAL COMPOSITION FOR ENHANCING SKIN PROPERTIES**
ORALE ZUSAMMENSETZUNG ZUR VERBESSERUNG DER HAUTEIGENSCHAFTEN
COMPOSITION ORALE POUR AMÉLIORER L'ÉTAT DE LA PEAU

(30) Priority: 29.11.2004 EP 04257376
(43) Date of publication of application: 19.09.2007
(73) Proprietor: Unilever PLC, London EC4Y 0DY (GB); Unilever N.V., 3013 AL Rotterdam (NL)
(72) Inventor: CASEY, John, Unilever R & D Port Sunlight, Bebington, Wirral Merseyside CH63 3JW (GB); JENKINS, Gail, Unilever R & D Colworth, Bedfordshire, MK44 1LQ (GB); ROGERS, Julia Sarah, Unilever R & D Colwoorth, Bedfordshire, MK 44 1 LQ (GB); WANTLING, Simon D., Unilever R & D Colworth, Bedford, MK44 1LQ (GB)
(74) Representative: Acham, Nicholas Clive
(86) International application number: PCT/EP2005/011658
(87) International publication number: WO 2006/056293

(56) References cited:
- WO-A-01/78674
- WO-A-2004/068970
- DE-A1- 4 020 874
- US-A- 5 965 153
- US-A1- 2003 082 275

## Description

The present invention relates to a consumable product for enhancing skin appearance.

### BACKGROUND AND PRIOR ART

Improving the appearance and feel of human skin has received a great deal of research effort. However, the vast majority of commercially available product address this problem by acting on the exterior of the skin. The most common form being a topical skin cream. However, such topical application have their limitations and deal primarily with the dead surface layers of the skin. It is known that certain ingredients can provide improvements in skin appearance and texture from being ingested. Such ingredients thus act from the interior of the skin and therefore can provide greater opportunities for improving the skin by accessing the living interior. Furthermore such an effect may be perceived by the general public as being more potent or medical in nature than a topical application.

Dietary fish oil is known to convey significant protection against UVR-induced erythema upon ingestion.

Carotenoids such as lycopene and β-carotene have also been shown to give significant protection against UVR-induced erythema when induced orally.

Likewise, vitamins E & C when taken orally in combination have also been shown to provide protection against UVR-induced erythema.

ω-3 polyunsaturated fatty acids (PUFA's) are believed to be more effective than ω-6 PUFA's at delivering a skin benefit. Oral consumption of W-3 PUFA's leads to a reduction in UV-induced erythema and in the levels of key inflammatory mediators, such as Prostaglandin E2 in the skin. ω-6 PUFA's do not exhibit the same functionality. Fish oil is a convenient source of ω-3 because it is available in large quantities at a reasonable cost. However, it has the major disadvantage of being oily and being prone to oxidative degredation (i.e. going rancid).

US 6,589,535 (Johnson & Johnson) discloses a nutritional supplement which contains an oil rich in ω-3 and ω-6 fatty acids and a carotenoid in combination to combat the harmful effects of xenobiotics on the skin, in particular on the skin's immune system. However, this is limited to food supplements such as capsules or tablets and does not disclose how such materials may be delivered via a beverage or other food product. Blackcurrent seed oil is preferred as the source of the fatty acids, however this contains the less efficaceous ω-3 PUFA α-linolenic acid and is not as rich overall in ω-3 PUFA's as fish oil.

However a problem with food supplements is that they are not very palatable and can be perceived as being medicinal and are therefore less likely to be consumed regularly.

US2003/0082275 discloses a drinkable ω-3 preparation, which is storage stable. The drink disclosed contains a very high level of oil and consequently is unstable, forming a two-phase beverage upon storage. A drink having 4wt% oil, giving an ω-3 concentration of 1.6 wt% is exemplified. Egg yolk is used as an emulsifier which contains approximately 8wt% lecithin.

Other beverages have recently appeared on the market but which have substantially less quantities of fish oil. One in particular contains lecithin and 0.04 wt% fish oil.

The present inventors have discovered that a water-based product comprising a high quantity of ω-3 oil, and antioxidant, a flavouring and a phospholipid emulsifier provides a product which can be consumed regularly and frequently, is good tasting and delivers noticeable skin benefits over time.

Thus, the present invention provides a product suitable for regular consumption, comprising at least 50% water, 0.2 to 5 wt% of an oil comprising at least 12wt% of docosahexaenoic acid and eicosapentaenoic acid, an antioxidant, a flavouring and at least 0.01 wt% food-grade phospholipid emulsifier.

### DETAINED DESCRIPTION OF THE INVENTION

### The product

The product is water based, i.e. comprises at least 50wt% water, preferably at least 60wt% or even at least 70wt% water. It may be either liquid or frozen. The product thus has the sensation of being a regular water-based product and thus be consumed on a regular basis as part of a consumers normal diet. For example it could replace a fruit juice normally consumed at breakfast time.

Preferably the product has a viscosity of from 2 to 100 centipoise at a shear rate of 1s⁻¹ and at 25°C.

### Oil

Fish oil is known to be rich in ω-3 polyunsaturated fatty acids. The present inventors have also confirmed sporadic reports that ω-3 polyunsaturated fatty acids can give noticeable skin benefits when consumed in high enough quantities. Unfortunately the commercially available drinks on the market contain at least an order of magnitude less than the amount where any beneficial effect becomes noticeable.

The product of the present invention comprises from 0.2 to 5 wt% of oil. Preferably the product comprises from 0.4 to 3 wt% oil. The oil is made up of at least 12 wt% of DHA and EPA. Preferably it is made up of at least 20 wt% EPA and DHA, more preferably at least 30 wt% EPA and DHA. These levels ensure that the consumable emulsion remains stable and yet also permit noticeable benefits from the fish oil to be observed when consumed regularly.

Eicosapentaenoic acid (EPA) is one of several ω-3 fatty acids used by the body. Increased intake of EPA has been shown to be beneficial in coronary heart disease, high blood pressure, and inflammatory disorders such as rheumatoid arthritis.

DHA is an ω-3, polyunsaturated, 22-carbon fatty acid. It is also present in abundance in certain fish (such as tuna and bluefish) and marine animal oils.

Eicosapentaenoic acid (EPA) and docosahexaenoic acid (DHA), come from cold water fish such as wild salmon (not farm raised), mackerel, sardines, herring and other northern marine animals. Fish can make EPA and DHA from the ω3 essential fatty acid, alpha-linolenic acid (LNA), but get much of their EPA and DHA from brown and red algae which manufacture EPA and DHA from carbohydrates - sugar, starch, cellulose, etc.

More recently, brown and red algae have begun to be grown commercially for EPA and DHA. These make 10 to 14% of long-chain ω3s (on dry weight basis) and can be used as food sources of EPA and DHA-containing triglycerides.

### Antioxidant

Antioxidant is required in order to prevent or slow down the natural oxidative degradation of the fish oil. Rancid fish oil not only has an unpleasant taste but may even have negative health effects (Kubow S., "Toxicity of dietary lipid peroxidation products", Trends in Food Sciences & Technology, September, 67-71 (1990)).

Suitable antioxidants can be selected, although not exclusively from the following list, either singularly or in combination: TBHQ, Ascorbyl esters (e.g. ascorbyl palmitate), ascorbic acid, Tocopherols, Rosemary Extract, fruit concentrates or extracts, black or green tea extract, Propyl Gallate, essential oils or oleoresins, butylated hydroxyanisole (BHA), butylated hydroxytoluene (BHT), citric acid or esters, co enzyme Q10, Tocotrienols, Chelators (e.g. EDTA), Carriers, polyphenols, phenolic compounds, flavonoids, oxygen scavengers.

Especially preferred antioxidants are vitamins C and E. Not only are these effective antioxidants but they also have been shown to give skin benefits when consumed.

An amount of antioxidant should be added sufficient to prevent the fish oil from going rancid over a typical shelf-life of 6 months. Clearly the amount of antioxidant will depend on the type and activity of the antioxidant used. However, preferably the product has a ratio of antioxidant to oil of from 1:10 to 1:100 based on the antioxidant activity of vitamin C. E.g., if an antioxidant with twice the activity of vitamin C was used, the ratio would be from 1:20 to 1:200.

For these purposes an antioxidant activity is as measured using an appropriate assay (e.g. Trolox equivalent antioxidant capacity).

### Flavouring

The flavouring may be natural or synthetic. It is required to make the product more palatable for consumption.

### Emulsifier

The inventors have found that not all food-grade emulsifiers are suitable for carrying high quantities of fish oil. However, surprisingly, phospholipid emulsifiers were found to be very suitable.

A food grade phospholipid emulsifier is required in order to carry the fish oil in the oil-in-water emulsion. It is preferred that the phospholipid emulsifier is lecithin. Phospholipid emulsifiers are oil soluble, but the lecithin can be added to either phase prior to emulsification. Preferably it is added to the aqueous phase.

The inventors have found that it is required that there be at least 0.01 wt% food-grade phospholipid emulsifier. Preferably from 0.05 to 3 wt%, more preferably from 0.1 to 1 wt%.

### Further additional ingredients

It is preferred that the product also comprises from 0.01 to 0.5 wt% soy isoflavones. This is equivalent to from 10 to 500 mg/100g. Preferably the product contains from 0.01 to 0.3 wt% soy isoflavones. Soy isoflavones are components within soy that have a biological function similar to oestrogen, including the promotion of dermal matrix protein synthesis. In addition, they have also been shown to have anti-inflammatory properties and stimulate synthesis of hyaluronic acid - a proteoglycan in skin which can retain water and thereby influence skin firmness. Preferably the soy isoflavones are selected from genistein and daidzein.

It is also preferred that the product also comprises from 0.0005 to 0.1 wt% carotenoids. This is equivalent to from 0.5 to 100 mg/100g. Preferably the product contains from 0.002 to 0.04 wt% carotenoids. The carotenoids, being oil soluble, would be comprised predominantly within the oil phase. Highly preferred carotenoids are β-carotene, and lycopene. These carotenoids provide moderate protection from UV induced erythema, thought to be due to their antioxidant functionality including scavenging of reactive oxygen species.

### Process for the manufacture of the product

The product of the present invention is made up by preparing an aqueous phase and an oil phase. In general the water-soluble ingredients are put together in the aqueous phase and the oil-soluble ingredients in the oil phase. The exception is the emulsifier. It has been surprisingly found that the emulsifier, which is oil-soluble, gives a more stable emulsion when it is added to the aqueous phase.

The two phases are then blended together in conventional emulsifier equipment. The produced emulsion is shelf-stable and the oil does not go rancid for months.

The oil phase and aqueous phase are then blended together to form a homogenous stable emulsion.

In a preferred process the oil is on a powdered carrier material to assist emulsion formation.

The stable emulsion may then be packaged in a sealed container such as a metal, coated cardboard (e.g. tetra Pak) or plastic container. The container is then preferably sealed so as to give no headspace or a gas filled (e.g. nitrogen or carbon dioxide) headspace. This assists still further in preventing the fish oil oxidising.

Alternatively the emulsion may be frozen and packaged and sold as a frozen consumer product.

### EXAMPLES

### Example 1

A beverage was made up with the following formula:

| **Ingredient** | **Wt%** |
|---|---|
| Fish oil | 3.3 |
| Vitamin C | 0.17 |
| Vitamin E | 0.248 |
| Fruit Flavouring | 0.5 |
| Lecithin | 0.3 |
| Lycopene (20% active) | 0.027 |
| Beta-carotene (30%) | 0.008 |
| Soy isoflavone (40%) | 0.083 |
| Sugar | 7 |
| Citric acid | 0.18 |
| Fruit concentrates (grape/blueberry/raspberry) | 3.96 (2.6/0.8/0.56) |
| Xanthan gum | 0.15 |
| Water | 84.07 (To 100%) |

The beverage had a good taste and colour, and 150ml twice per day for a few weeks gave noticeable improvements in the appearance and texture of the skin.

## Claims

1. A stable consumable emulsion, comprising at least 50% water, 0.2 to 5 wt% of an oil comprising at least 12wt% of docosahexaenoic acid and eicosapentaenoic acid, an antioxidant, a flavouring, at least 0.01 wt% food-grade phospholipid emulsifier, from 0.0005 to 0.1 wt% carotenoid material, and from 0.01 to 0.5 wt% soy isoflavone material.

2. A product according to claim 1, wherein the flavouring comprises fruit and/or vegetable extract.

3. A product according to claim 1 or claim 2, wherein the soy isoflavone is selected from genistein and daidzein.

4. A product according to any preceding claim, wherein the phospholipid emulsifier is lecithin.

5. A product according to any preceding claim, which has a viscosity of from 2 to 100 centipoise at a shear rate of 1s⁻¹ and at 25°C.

6. A product according to any preceding claim, wherein at least one component is naturally sourced, preferably the oil.

7. A product according to any preceding claim, which is a beverage packaged in a sealed container, the container having a nitrogen gas headspace.

8. A process for making a product according to any preceding claim, wherein an aqueous phase comprising the emulsifier and an oil phase comprising the fish oil are blended together to create a stable emulsion

## Patentansprüche

1. Stabile genießbare Emulsion, umfassend wenigstens 50 % Wasser, 0,2 bis 5 Gewichts-% eines Öls, das wenigstens 12 Gewichts-% Docosahexaensäure und Eicosapentaensäure umfasst, ein Antioxidans, ein Aromamittel, wenigstens 0,01 Gewichts-% Phospholipid-Emulgator mit Lebensmittelqualität, 0,0005 bis 0,1 Gewichts-% Carotenoid-Material und 0,01 bis 0,5 Gewichts-% Sojaisoflavon-Material.

2. Produkt gemäß Anspruch 1, wobei das Aromamittel Frucht- und/oder vegetabilen Extrakt umfasst.

3. Produkt gemäß Anspruch 1 oder Anspruch 2, wobei das Sojaisoflavon aus Genistein und Daidzein ausgewählt ist.

4. Produkt gemäß einem vorangehenden Anspruch, wobei der Phospholipid-Emulgator Lecithin ist.

5. Produkt gemäß einem vorangehenden Anspruch, das eine Viskosität von 2 bis 100 Centipoise bei einer Scherrate von 1 s⁻¹ und bei 25 °C hat.

6. Produkt gemäß einem vorangehenden Anspruch, wobei wenigstens eine Komponente aus einer natürlichen Quelle stammt, vorzugsweise das Öl.

7. Produkt gemäß einem vorangehenden Anspruch, welches ein Getränk ist, das in einem dicht verschlossenen Behälter verpackt ist, wobei der Behälter einen Stickstoffgas-Kopfraum hat.

8. Verfahren zur Herstellung eines Produkts gemäß einem vorangehenden Anspruch, wobei eine wässrige Phase, die den Emulgator umfasst, und eine Ölphase, die das Fischöl umfasst, unter Herstellung einer stabilen Emulsion miteinander vermischt werden.

## Revendications

1. Émulsion comestible stable, comprenant au moins 50 % d'eau, 0,2 à 5 % en poids d'une huile comprenant au moins 12 % en poids d'acide docosahexaénoïque et d'acide éicosapentaénoïque, un antioxydant, un agent aromatisant, au moins 0,01 % en poids d'un émulsifiant phospholipidique de qualité alimentaire, 0,0005 à 0,1 % en poids d'une matière de type caroténoïde, et 0,01 à 0,5 % en poids d'une matière de type isoflavone de soja.

2. Produit selon la revendication 1 dans lequel l'agent aromatisant comprend un extrait de fruit et/ou de légume.

3. Produit selon la revendication 1 ou la revendication 2, dans lequel l'isoflavone de soja est choisie parmi la génistéine et la daidzéine.

4. Produit selon l'une quelconque des revendications précédentes, dans lequel l'émulsifiant phospholipidique est la lécithine.

5. Produit selon l'une quelconque des revendications précédentes, qui a une viscosité de 2 à 100 centipoises à une vitesse de cisaillement de 1 s⁻¹ et à 25°C.

6. Produit selon l'une quelconque des revendications précédentes, dans lequel au moins un composant est d'origine naturelle, de préférence l'huile.

7. Produit selon l'une quelconque des revendications précédentes, qui est une boisson conditionnée dans un récipient scellé, ce récipient ayant un espace de tête contenant de l'azote gazeux.

8. Procédé de fabrication d'un produit selon l'une quelconque des revendications précédentes, dans lequel une phase aqueuse comprenant l'émulsifiant et une phase huileuse comprenant l'huile de poisson sont mélangées ensemble pour créer une émulsion stable.
